# EUROPEAN PATENT SPECIFICATION

(11) **EP 3 964 739 B1**
(45) Date of publication and mention of the grant of the patent: **29.03.2023**
(21) Application number: 20305984.5
(22) Date of filing: 04.09.2020
(51) Int. Cl.: F16K 5/04, F16K 5/06, F01P 7/14, F16J 15/3268, F16J 15/328, F16J 15/3284, F16J 15/02, F16J 15/06

(54) **SEALING GASKET FOR VALVE USING A DYNAMIC ELEMENT**
DICHTUNG FÜR EIN VENTIL MIT EINEM DYNAMISCHEN ELEMENT
JOINT D'ÉTANCHÉITÉ POUR VANNE UTILISANT UN ÉLÉMENT DYNAMIQUE

(43) Date of publication of application: 09.03.2022
(73) Proprietor: LE JOINT FRANÇAIS SNC, 75008 Paris (FR)
(72) Inventor: PRADELLE, Sébastien, D- 68165 MANNHEIM (DE)
(74) Representative: Gevers & Orès

(56) References cited:
- EP-A1- 2 551 566
- EP-B1- 2 551 566
- WO-A1-2017/199654
- CN-A- 110 645 358
- ES-A1- 2 143 367
- ES-B1- 2 143 367
- FR-A5- 2 204 281
- US-A- 1 224 557
- US-A- 2 883 146

## Description

### FIELD OF THE INVENTION

The present invention is related to a sealing gasket, particularly suitable for valves of engine cooling and refrigerant circuits.

### BACKGROUND OF THE INVENTION

Valves are widely used for regulating the engine cooling and refrigerant circuits. Valves can be also present in other circuits like transmission oil due to the cooling function of the oil. Classically, each port of a valve is sealed individually with a sealing solution located in a housing. Two kind of design can be then identified. A first design uses a sphere as dynamic element. This kind of design is complex because it requires a design feature to enable to fix the seal in the housing. Consequently, the assembly process is complicated. A second design uses a cage as dynamic element and the seal is mounted on the cage. According to the prior art, such as WO 03/006859 A1 or EP 3 067 597 A1, some sealing members have been developed to seal a cage-type valve. The sealing member is initially planar and is then rolled circumferentially on a rotor lodged in the housing. Nevertheless, a drawback of this kind of gaskets is the possible lack of tightness at the junction of the extremities of the sealing member. A similar sealing member is also known from FR 2 204 281 A5.

The present invention proposes to solve, among others, this drawback. Moreover, the invention is a sealing solution that can be used for a cage-type valve as well as for a sphere-type valve.

### SUMMARY OF THE INVENTION

The sealing gasket according to the invention is cheap, easy to fabricate and easy to assembly.

To this end, the present invention proposes a sealing gasket formed as a single piece of resilient material and comprising:
- a first toric part having a first torus diameter and a first cross section with a first dimension which is constant in all directions;
- a second toric part having a second torus diameter greater than the first torus diameter and a second cross section with a second dimension which is constant in all directions; and
- at least two arms, each having a cross section with a dimension which is constant in all directions and comprising a first end and a second end, each first end being linked to the first toric part and each second end being linked to the second toric part;
characterized in that, in a folded state, said sealing gasket is substantially planar, and in that, for each arm, said first end is a first bend oriented in a first direction and said second end is a second bend oriented in a second direction, said second direction being opposed to said first direction, in such a way that each arm extends substantially circumferentially between its first bend and its second bend, the first bends of the different arms being further all oriented in the same first direction, and accordingly the second bends of the different arms being all oriented in the same second direction, so that the gasket can be deployed by a helical unwinding in a three dimensional unfolded state.

According to various features of the invention, which may be taken together or separately, constituting as many possible embodiments:
- the first dimension of the first toric part is greater than the second dimension of the second toric part;
- the first toric part is configured to deform so that, in the unfolded state, the first dimension decreases to be substantially equal to the second dimension of the second toric part;
- the dimension of the arms is equal to the second dimension of the second toric part;
- the arms are configured to deform so that, in the unfolded state, said arms are substantially longer than in the folded state;
- the sealing gasket is formed from an elastomeric material;
- the sealing gasket comprises a third toric part linked to the second toric part by at least two other arms comprising a first other bend linked to the second toric part and oriented in another first direction, and a second other bend linked to the third toric part and oriented in another second direction being opposed to said other first direction, in such a way that, in the folded state, each other arm extends substantially circumferentially between its first other bend and its second other bend.

The invention proposes also a process of deployment of the sealing gasket as described above, comprising the steps of:
a) fixing the first toric part in a first groove of a mechanical piece;
b) moving the second toric part relative to the first toric part so that the sealing gasket describes a helical unwinding;
c) fixing each of the at least two arms in a respective lateral groove of the mechanical piece; and
d) fixing the second toric part in a second groove of the mechanical piece.

According to various features of the invention, which may be taken together or separately, constituting as many possible embodiments:
- in the case where the sealing gasket comprises a third toric part, the process comprises additional steps of:
   e) moving the third toric part relative to the second toric part;
   f) fixing each other arm in another respective lateral groove of the mechanical piece; and
   g) fixing the third toric part in a third groove of the mechanical piece
- the mechanical piece is a dynamic element of a valve.

The invention proposes also a valve comprising a housing and a dynamic element characterized in that the said valve comprises a sealing gasket such as previously described.

According to various features of the invention, which may be taken together or separately, constituting as many possible embodiments:
- the dynamic element is a cage or a sphere.

### BRIEF DESCRIPTION OF THE DRAWINGS

Other features, aims and advantages of the invention will become apparent from the following description, which is given purely by way of illustrative and non-limiting example and should be read with reference to the accompanying drawings, in which:
[Fig.1] shows a schematic top view of a sealing gasket in a folded state according to an embodiment of the present disclosure;
[Fig.2] shows a schematic cross-section of the sealing gasket of Fig.1 according to the cutting plane AA;
[Fig.3] shows, in a perspective view, the sealing gasket of Fig.1 being deployed;
[Fig.4] shows, in a perspective view, the sealing gasket of Fig.3 in a final unfolded state;
[Fig.5] shows a schematic top view of a sealing gasket in a folded state according to another embodiment of the present disclosure;
[Fig.6] shows, in a perspective view, a rotor comprising grooves for a cage-type valve;
[Fig.7] shows, in a perspective view, the sealing gasket according to Fig.1 mounted in the grooves of the rotor of Fig.6.
[Fig.8] shows, in a perspective view, the sealing gasket according to Fig.1 mounted on a spherical dynamic element.

### DETAILED DESCRIPTION OF EXEMPLARY ASPECTS

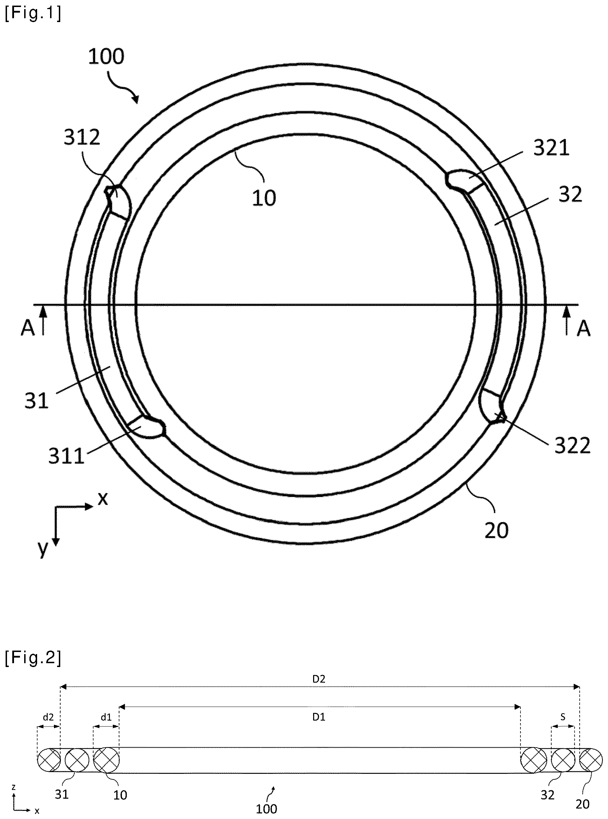

The following refers to Fig.1 and Fig.2. These figures illustrate a sealing gasket 100 in a folded state.

The sealing gasket 100 is formed as a single piece and comprises a first toric part 10, a second toric part 20 and at least two arms 31, 32.

The first toric part 10 is defined by its first cross section with a constant first dimension d1 and by its internal diameter, named first torus diameter D1. In the present example, the first cross section is a uniform circular section which first dimension d1 is therefore its diameter. In a variant, the first cross section may be a non-circular section with odd-numbered lobes. The number of lobes is at least equal to three so that the first dimension d1 is effectively constant in all directions. The cross section may be a trilobular section or a pentalobular section for example. These kinds of section present the interest to allow twisting while maintaining a constant dimension in all directions so that the effectiveness of the tightness is preserved.

The second toric part 20 is defined by its second cross section with a constant second dimension d2 and by its internal diameter, named second torus diameter D2. In the present example, the first cross section is a uniform circular section which second dimension d2 is therefore its diameter. In a variant, the second cross section may be a non-circular section with odd-numbered lobes such as trilobular section or a pentalobular section.

In the following, the description is dedicated to the case of a uniform circular cross section for which the first dimension d1 and the second dimension d2 correspond to the diameter of the cross section.

The first and second toric parts 10, 20 are concentric. The second torus diameter D2 is greater than the first torus diameter D1. The first section diameter d1 and the second section diameter d2 may be the same or may be different. For example, the first section diameter d1 is greater than the second section diameter d2.

The arms 31, 32 extend between the first toric part 10 and the second toric part 20. It may be understood that a space separates the arms 31, 32 from the first toric part 10 and from the second toric part 20. Each arm has a cross section with a dimension S which is constant in all directions. In the present example, the cross section is a uniform circular section which dimension S is therefore its diameter. In a variant, the cross section may be a non-circular section with odd-numbered lobes such as trilobular section or a pentalobular section. Each arm comprises a first end linking the first toric part 10 and a second end linking the second toric part 20. The first end linking the first toric part 10 is a bend, named first bend 311, 321. The first bend 311, 321 is oriented in a first direction and forms a non-zero angle. Each first bend 311, 321 of each arm 31, 32 is oriented in the same first direction. The second end linking the second toric part 20 is also a bend, named second bend 312, 322. The second bend 312, 322 is oriented in a second direction, opposed to the first direction of the first bend 311, 321, and forms a non-zero angle.

In the folded state, each arm 31, 32 extends substantially circumferentially between its first bend 311, 321 and its second bend 312, 322

The arm section diameter S may be the same as the first section diameter d1 and/or the second section diameter d2. In a variant, the arm section diameter S may be different from the first section diameter d1 and/or the second section diameter d2. For example, the value of S may be ranged between the value of d1 and d2, such as d1 is the greatest section diameter.

In the example of figure 1, both arms 31 and 32 are symmetrically positioned from each other. The first bend 311 of the arm 31 is positioned with an angular spacing of 180° from the first bend 321 of the arm 32. In other words, each bend of each arm linking the toric part 10 is diametrically opposed to another. This example is not limitative and other configurations may be adopted. In a variant, the bend 311 and the bend 321 may be asymmetrically positioned, with an angular spacing of 30°, 60° or 90° for example. In a variant, the sealing gasket 100 may comprise, for example, six arms divided into three groups of two arms, each group being positioned with an angular spacing of 120° from another group and the two arms of each group being positioned with an angular spacing of 30° from each other. It may be understood that the smaller the length of the arms 31, 32, the smaller the angular spacing can be. An advantage of these configurations is to permit the adaptation of the sealing gasket 100 to different applications.

It may be understood that the arms 31, 32, the first toric part 10 and the second toric part 20 are in the same plane, so that, in a folded state, the sealing gasket 100 is planar.

Nevertheless, it is possible that the first toric part 10 and the second toric part 20 are slightly offset axially. This offset may reach up to a few millimeters. Subsequently, it may be understood that, in a folded state, the sealing gasket 100 is substantially planar. The offset presents the advantage to decrease the mechanical stress at the junctions of the arms 31, 32 with the toric parts 10, 20 when the sealing gasket 100 is unfolded at a final state.

The sealing gasket 100 is made in a resilient material which confers to the sealing gasket 100 the property of being largely deformed with stress. The resilient material may be in particular an elastomeric material such as EPDM (ethylene propylene diene monomer), HNBR (hydrogenated nitrile butadiene rubber), AEM (ethylene acrylic elastomers) or FKMs (fluoroelastomer materials). Another kind of resilient material may be used.

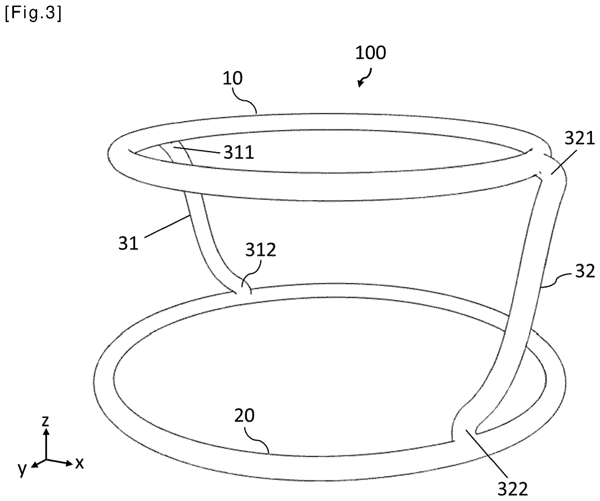

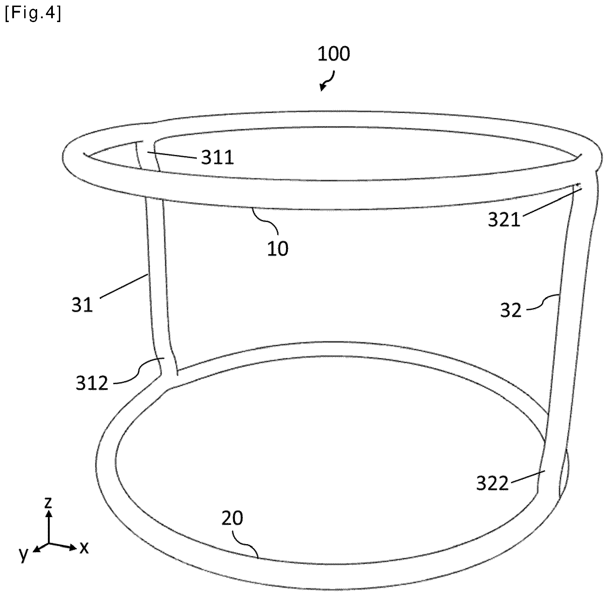

The sealing gasket 100 is initially in a folded state and can switch in a three dimensional unfolded state which is illustrated by the Fig.3 and Fig.4. In the unfolded state, the sealing gasket 100 is non-planar.

Fig.3 illustrates the sealing gasket 100 in an intermediate state when the deployment is in progress. In this state, the arms 31, 32 are gradually deformed and the toric parts 10, 20 are moved relative to each other. It may be understood that the sealing gasket 100 is not planar anymore.

Fig.4 shows the sealing gasket 100 in a final state, or unfolded state. In this state, the first toric part 10 and the second toric part 20 are placed in different planes, preferentially in planes substantially parallel. The first torus diameter D1 of the first toric part 10 is substantially equal to the second torus diameter D2 of the second toric part 20. The first section diameter d1 of the first toric part 10 is substantially equal to the second section diameter d2 of the second toric part 20.

The angle formed by the bends 311, 321 with the first toric part 10 in the unfolded state is greater than the one formed in the folded state. In Fig.4, for example, the angle is close to 90°. It is the same for the bends 312, 322 with the second toric part 20 so that the bend 311 and the bend 312 are substantially aligned. It may be understood that the bend 321 and the bend 322 are also substantially aligned.

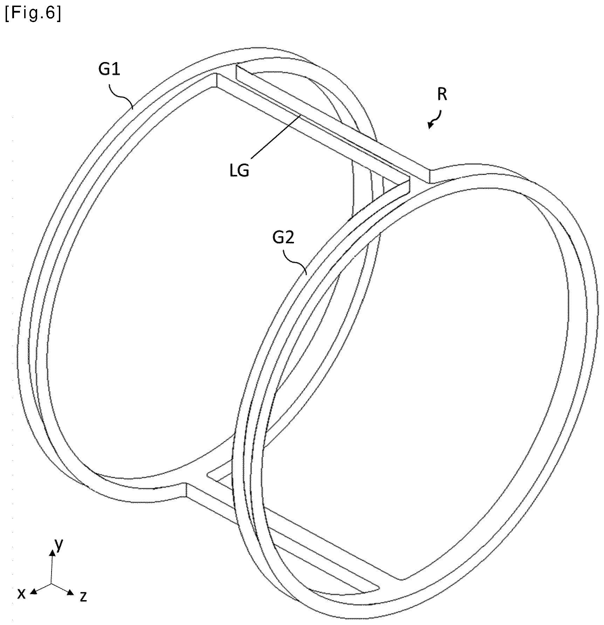

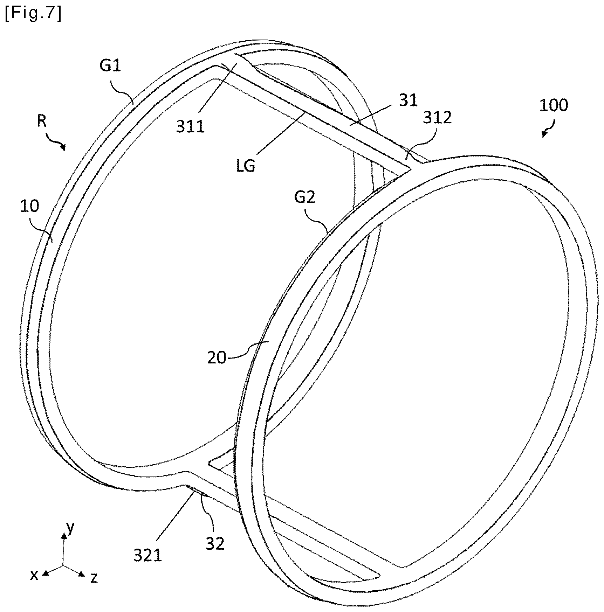

In order to switch from the folded state to the unfolded state, a process of deployment of the sealing gasket 100 has been developed. The purpose of the sealing gasket 100 is to seal a mechanical assembly comprising at least two mechanical pieces, one of the mechanical pieces comprising grooves and being lodged into the other piece. An example of mechanical piece comprising grooves is illustrated by Fig.6 and Fig.7. This mechanical piece R comprises a first groove G1, a second groove G2 and lateral grooves LG linking the first groove G1 to the second groove G2.

The process comprises the steps of:
a) fixing the first toric part 10 in a first groove G1 of a mechanical piece R;
b) moving the second toric part 20 relative to the first toric part 10 so that the sealing gasket 100 describes a helical unwinding;
c) fixing each of the at least two arms 31, 32 in a respective lateral groove LG of the mechanical piece R; and
d) fixing the second toric part 20 in the second groove G2 of the mechanical piece R.

During the step b), it may be understood that the arms 31, 32 are elongated as depicted in Fig.3 and Fig.4. This elongation is a consequence of moving the second toric part 20 relative to the first toric part 10.

Previously, it has been described that the first toric part 10 and the second toric part 20 have different torus diameters, respectively D1 and D2. It has also been described that the section diameters, respectively d1 and d2, of the first and second toric parts 10, 20 may be different (d1 being greater than d2). In this particular case, it may be understood that, during step a), the first toric part 10 is stretched and deformed so that the first section diameter d1 is decreased and the first torus diameter D1 is increased to fit with the first groove G1 of the mechanical piece R.

Similarly, during step c), the second toric part 20 is stretched and deformed so that the second section diameter d2 is decreased and the second torus diameter D2 is increased to fit with the second groove G2 of the mechanical piece R.

It may be understood that despite the decrease of the first section diameter d1 and the decrease of the second section diameter d2, each toric part 10, 20 remains with a cross section whose dimension is constant in all directions. It is just the value of said constant which changes between the folded state and the unfolded state while the shape of the cross section remains the same.

It may also be noticed that the first toric part 10 may be fixed in the second groove G2 and the second toric part 20 may be fixed in the first groove G1. In other words, the direction of the assembly does not matter.

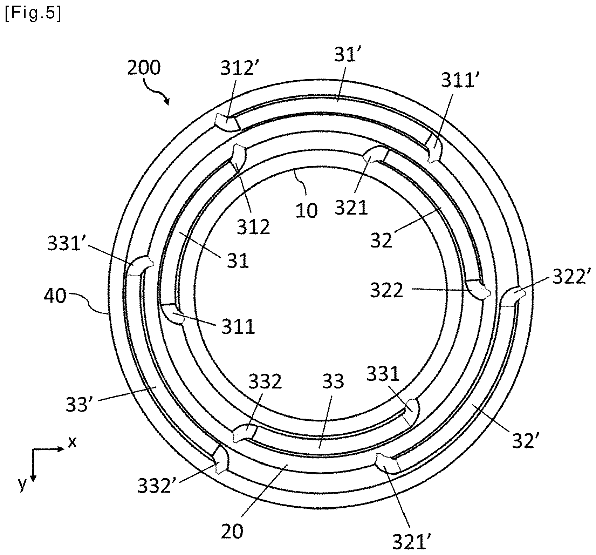

The deformation and/or the deployment of the sealing gasket 100 during the process previously described may be performed manually or automatically by mechanical means such as a machine. In another embodiment, illustrated by Fig.5, the sealing gasket 200 comprises a third toric part 40 and at least two other arms 31', 32'. The first and second toric parts 10, 20 and the at least two arms 31, 32 are as previously described in the sealing gasket 100.

The third toric part 40 is concentric with the first and second toric parts 10, 20. The third toric part 40 is defined by its third cross section with a constant dimension d3 and its internal diameter, named third torus diameter D3. The third torus diameter D3 is greater than the second torus diameter D2. In the present example, the third cross section is a uniform circular section which third dimension d3 is therefore its diameter. In a variant, the third cross section may be a trilobular section or a pentalobular section. In the following, the description is dedicated to the case of a uniform circular cross section for which the third dimension d3 corresponds to the diameter of the cross section.

The at least two other arms 31', 32' extend between the second toric part 20 and the third toric part 40, linking the second and the third toric parts 20, 40 together. Each other arm 31', 32' comprises a first other bend 311', 321' linked to the second toric part 20 and a second other bend 312', 322' linked to the third toric part 40. The first other bend 311', 321' of each other arm 31', 32' is oriented in another first direction which may be the same or opposed to the first direction of the first bend 311, 321 of the arm 31, 32. The second other bend 312', 322' of each other arm 31' ,32' is oriented in another second direction, opposed to the other first direction of the first other bend 311', 321'. It may be understood that, in the folded state, each other arm 31', 32' extends substantially circumferentially between its first other bend 311', 321' and its second other bend 312', 322'.

Fig.5 depicts a particular case wherein three arms 31, 32, 33 extending between the first and the second toric parts 10, 20 and three other arms 31', 32', 33' extending between the second and the third toric parts 20, 40. In this case, the first bend 311, 321, 331 of each arm 31, 32, 33 is oriented in a first direction and the second bend 312, 322, 332 is oriented in a second direction opposed to the first direction. The first bend 311', 321', 331' of each other arm 31', 32', 33' is oriented in a direction opposed to the first direction of the first bend 311, 321, 331. Consequently, the second bend 312', 322', 332' of each arm 31', 32', 33' is oriented in a direction opposed to the second direction of the second bend 312, 322, 332.

It may be understood that the first other bend 311', 321', 331' of each other arm 31', 32', 33' may be oriented in the same direction that the first bend 311, 321, 331, and so, the second other bend 312', 322', 332' of each other arm 31', 32', 33' may be oriented in the same direction that the second bend 312, 322, 332.

In the folded state, the other arms 31', 32', 33', extending between the second and the third toric parts 20, 40, may be placed alternately with the arms 31, 32, 33, extending between the first and the second toric parts 10, 20. In a variant, the other arms 31', 32', 33' may be aligned with the arms 31, 32, 33.

A general rule may be applied for the sealing gasket in a folded state. A number N of toric parts may be comprised by the sealing gasket 100, 200. Systematically, the torus diameter D_{N} of the toric part N would be greater than the torus diameter D_{N-1} of the toric part N-1. In the case where the section diameter d of the toric parts would be different, the section diameter d_{N} of the toric part N would then be smaller than the section diameter d_{N-1} of the toric part N-1. The deployment of the sealing gasket 200 with a third toric part 40 is similar to the process previously described. Steps a) to d) are the same and the process is completed by additional steps of:
e) moving the third toric part 40 relative to the second toric part 20;
f) fixing each other arm 31', 32', 33' in another respective lateral groove of the mechanical piece; and
g) fixing the third toric part 40 in a third groove of the mechanical piece.

During step f), the third toric part 40 is stretched and deformed so that the third section diameter d3 is decreased and the second torus diameter D3 is increased to fit with the third groove of the mechanical piece. It may be understood that despite the decrease of the third section diameter d3, the third toric part 40 remains with a cross section whose dimension is constant in all directions. It is just the value of said constant which changes between the folded state and the unfolded state while the shape of the cross section remains the same.

### Example: practical application for a cage-type valve

In reference to Fig.6 and Fig.7, the following describes an example of practical application of the invention. In this example, a cage-type valve is used. The valve comprises a housing, a dynamic element as a rotor R, the rotor R being lodged in the housing, and the sealing gasket 100. The sealing gasket 100, as depicted in Fig.1 to Fig.4, is mounted between the rotor R and the housing. In the mounted position the sealing gasket 100 is received in different grooves G1, G2, LG arranged on the rotor R. The sealing gasket 100 is maintained in the grooves G1, G2, LG due to the inherent elasticity of the elastic sealing gasket 100.

In this example, a first groove G1 extend on the circumference of the rotor R. The diameter, at the bottom of the first groove G1, is 37.45 mm. The width and the height of the first groove G1 are respectively 2.2 mm and 1.275 mm. A second groove G2, identical in every respect to the first groove G1, extends also on the circumference of the rotor R. The first G1 and second G2 grooves are parallel and separated by a distance of 23.6 mm. Two lateral grooves LG, diametrically opposed, connect the first groove G1 and the second groove G2 to each other. It may be understood that the two lateral grooves LG are perpendicular to the first G1 and second G2 grooves so that the length of each lateral groove is 23.6 mm. The sealing gasket 100, in its folded state, presents a first diameter D1 equal to 27.85 mm, a second diameter D2 equal to 36 mm, a first section diameter d1 equal to 1.80 mm, a second section diameter d2 equal to 1.60 mm, a length equal to 21.50 mm and an arm section diameter S equal to 1.65 mm.

Typically, the diameter at the bottom of the first groove G1 is greater than the diameter D1 of the first toric part 10. In order to engage the first toric part 10 in the first groove G1 during the deployment of the sealing gasket 100, the first toric part 10 is stretched so that it deforms. As the diameter D1 increases the section diameter d1 uniformly decreases - taking into account the matter conservation. The deformation is performed until the first toric part 10 fits with the first groove G1.

Simultaneously with or once the installation of the first toric part 10 in the first groove G1, the second toric part 20 is moved relatively to the first toric part 10 so that the sealing gasket 100 describes a helical unwinding, as shown by Fig.3. This helical unwinding is due to the arms 31, 32 linking the first toric part 10 and the second toric part 20. Indeed, each arms presents a bend 311, 321 oriented in a given direction which forces the sealing gasket 100 to rotate in the same direction. For example, if the bend 311, 321 is oriented clockwise, the sealing gasket 100 will deploy clockwise.

The arms 31, 32 are also deformed during the deployment. The arms 31, 32 elongate so that their length increases and the arm section diameter S decreases.

Then, in an unfolded state, the first and second diameters D1' and D2' are substantially equal to 37.85 mm, in other words, equal to the groove G1, G2 diameter. The first section diameter d1', the second section diameter d2' and the arm section diameter S' are substantially equal so that the sealing gasket 100 is maintained in the different grooves G1, G2, LG. The length of the arms 31, 32 is substantially equal to 23.6 mm, in other words, equal to the distance between the first groove G1 and the second groove G2. It may be understood that the length, in the unfolded state, is substantially longer than the length, in the folded state.

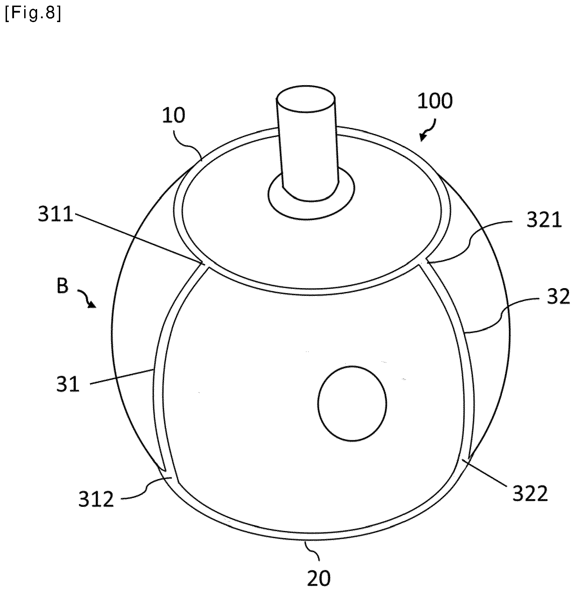

In reference to Fig.8, the sealing gasket 100 is mounted on a sphere B used for a sphere-type valve. As for a cage-type valve, the sealing gasket 100 is lodged into different grooves, not depicted in Fig.8, extending along the surface of the sphere B. The resilient material of the sealing gasket 100 allows it to fit with the shape of the sphere B. In other words, the sealing gasket 100 can deform to adapt and fit with the shape of the sphere B, in particular the arms 31, 32 which are then cambered.

The sealing gasket 100, 200 according to the invention presents various advantages. The sealing gasket 100, 200 being as one single substantially planar piece is easy to manufacture. Moreover, the sealing gasket 100, 200 is easy to fix on a mechanical piece and improves the sealing due to its constant cross section. Indeed, the sealing gasket can be locally twisted and maintain a constant section diameter along each toric part. Then, the sealing gasket 100, 200 stays lodged in the grooves. The sealing gasket 100, 200 may have more than two arms 31, 32 and more than two toric parts 10, 20 which allow the adaptation of the sealing gasket 100, 200 to various mechanical pieces. The sealing gasket 100, 200 may be adapted to a cage-type valve as well to a sphere-type valve.

## Claims

1. A sealing gasket (100, 200) formed as a single piece of resilient material and comprising:
- a first toric part (10) having a first torus diameter (D1) and a first cross section with a first dimension (d1) which is constant in all directions;
- a second toric part (20) having a second torus diameter (D2) greater than the first torus diameter (D1) and a second cross section with a second dimension (d2) which is constant in all directions; and
- at least two arms (31, 32), each having a cross section with a dimension (S) which is constant in all directions and comprising a first end and a second end, each first end being linked to the first toric part (10) and each second end being linked to the second toric part (20);
**characterized in that,** in a folded state, said sealing gasket (100) is substantially planar, and **in that**, for each arm, said first end is a first bend (311, 321) oriented in a first direction and said second end is a second bend (312, 322) oriented in a second direction, said second direction being opposed to said first direction, in such a way that each arm (31, 32) extends substantially circumferentially between its first bend (311, 321) and its second bend (312, 322), the first bends (311, 321) of the different arms (31, 32) being further all oriented in the same first direction, and accordingly the second bends (312, 322) of the different arms being all oriented in the same second direction, so that the gasket can be deployed by a helical unwinding in a three dimensional unfolded state.

2. The sealing gasket (100, 200) according to the preceding claim, wherein the first dimension (d1) of the first toric part (10) is greater than the second dimension (d2) of the second toric part (20).

3. The sealing gasket (100, 200) according to the preceding claim, wherein the first toric part (10) is configured to deform so that, in the unfolded state, the first dimension (d1) decreases to be substantially equal to the second dimension (d2) of the second toric part (20).

4. The sealing gasket (100, 200), according to any of the preceding claims, wherein the dimension (S) of the arms (31, 32) is equal to the second dimension (d2) of the second toric part (20).

5. The sealing gasket (100, 200), according to any of the preceding claims, wherein the arms (31, 32) are configured to deform so that, in the unfolded state, said arms are substantially longer than in the folded state.

6. The sealing gasket (100, 200) according to any of the preceding claims is formed from an elastomeric material.

7. The sealing gasket (100, 200) according to any of the preceding claims, comprises a third toric part (40) linked to the second toric part (20) by at least two other arms (31', 32') comprising a first other bend (311', 321') linked to the second toric part (20) and oriented in another first direction, and a second other bend (312', 322') linked to the third toric part (40) and oriented in another second direction being opposed to said other first direction, in such a way that, in the folded state, each other arm (31', 32') extends substantially circumferentially between its first other bend (311', 321') and its second other bend (312', 322').

8. A process of deployment of a sealing gasket (100, 200) according to any of the preceding claims comprising the steps of:
a) fixing the first toric part (10) in a first groove (G1) of a mechanical piece;
b) moving the second toric part (20) relative to the first toric part so that the sealing gasket (100) describes a helical unwinding;
c) fixing each of the at least two arms (31, 32) in a respective lateral groove (LG) of the mechanical piece; and
d) fixing the second toric part (20) in a second groove (G2) of the mechanical piece.

9. The process according to claim 8 in the case where the sealing gasket (200) comprises a third toric part (40) as in claim 7, the process comprising additional steps of:
e) moving the third toric part (40) relative to the second toric part (20);
f) fixing each other arm (31', 32') in another respective lateral groove of the mechanical piece; and
g) fixing the third toric part (40) in a third groove of the mechanical piece.

10. The process according to one of the claims 8 or 9, wherein the mechanical piece is a dynamic element of a valve.

11. A valve comprising a housing and a dynamic element **characterized in that** the said valve comprises a sealing gasket (100, 200) such as described in any of the claims 1 to 7.

12. The valve according to the preceding claim, wherein the dynamic element is a cage or a sphere.

## Patentansprüche

1. Dichtung (100, 200), die als ein einziges Stück aus elastischem Material hergestellt ist und Folgendes umfasst:
- ein erstes torisches Teil (10) mit einem ersten Torusdurchmesser (D1) und einem ersten Querschnitt mit einer ersten Abmessung (d1), die in allen Richtungen konstant ist;
- einen zweiten torischen Teil (20) mit einem zweiten Torusdurchmesser (D2), der größer ist als der erste Torusdurchmesser (D1), und einem zweiten Querschnitt mit einer zweiten Abmessung (d2), die in allen Richtungen konstant ist; und
- mindestens zwei Arme (31, 32), die jeweils einen Querschnitt mit einer in allen Richtungen konstanten Abmessung (S) aufweisen und ein erstes Ende und ein zweites Ende umfassen, wobei jedes erste Ende mit dem ersten torischen Teil (10) verbunden ist und jedes zweite Ende mit dem zweiten torischen Teil (20) verbunden ist;
**dadurch gekennzeichnet, dass** die Dichtung (100) in einem gefalteten Zustand im Wesentlichen eben ist und dass für jeden Arm das erste Ende eine erste Biegung (311, 321) ist, die in einer ersten Richtung ausgerichtet ist, und das zweite Ende eine zweite Biegung (312, 322) ist, die in einer zweiten Richtung ausgerichtet ist, wobei die zweite Richtung der ersten Richtung auf solche Weise entgegengesetzt ist, dass jeder Arm (31, 32) sich im Wesentlichen in Umfangsrichtung zwischen seiner ersten Biegung (311, 321) und seiner zweiten Biegung (312, 322) erstreckt, wobei die ersten Biegungen (311, 321) der verschiedenen Arme (31, 32) weiter alle in der gleichen ersten Richtung ausgerichtet sind und dementsprechend die zweiten Biegungen (312, 322) der verschiedenen Arme alle in der gleichen zweiten Richtung ausgerichtet sind, sodass die Dichtung durch spiralförmiges Abwickeln in einem dreidimensionalen ungefalteten Zustand eingesetzt werden kann.

2. Dichtung (100, 200) nach dem vorstehenden Anspruch, wobei die erste Abmessung (d1) des ersten torischen Teils (10) größer ist als die zweite Abmessung (d2) des zweiten torischen Teils (20).

3. Dichtung (100, 200) nach dem vorstehenden Anspruch, wobei der erste torische Teil (10) so konfiguriert ist, dass er sich verformt, sodass im entfalteten Zustand die erste Abmessung (d1) abnimmt, um im Wesentlichen gleich der zweiten Abmessung (d2) des zweiten torischen Teils (20) zu sein.

4. Dichtung (100, 200) nach einem der vorstehenden Ansprüche, wobei die Abmessung (S) der Arme (31, 32) gleich der zweiten Abmessung (d2) des zweiten torischen Teils (20) ist.

5. Dichtung (100, 200) nach einem der vorstehenden Ansprüche, wobei die Arme (31, 32) so konfiguriert sind, dass sie sich so verformen, dass die Arme im ungefalteten Zustand wesentlich länger sind als im gefalteten Zustand.

6. Dichtung (100, 200) nach einem der vorstehenden Ansprüche aus einem Elastomermaterial hergestellt.

7. Dichtung (100, 200) nach einem der vorstehenden Ansprüche, umfassend einen dritten torischen Teil (40), der mit dem zweiten torischen Teil (20) durch mindestens zwei andere Arme (31', 32') verbunden ist, die eine erste andere Biegung (311', 321') umfassen, die mit dem zweiten torischen Teil (20) verbunden und in eine andere erste Richtung ausgerichtet ist, und eine zweite andere Biegung (312', 322'), die mit dem dritten torischen Teil (40) verbunden und in eine andere zweite Richtung ausgerichtet ist, die der anderen ersten Richtung auf solche Weise entgegengesetzt ist, dass sich jeder andere Arm (31', 32') im gefalteten Zustand im Wesentlichen in Umfangsrichtung zwischen seiner ersten anderen Biegung (311', 321') und seiner zweiten anderen Biegung (312', 322') erstreckt.

8. Verfahren zur Herstellung einer Dichtung (100, 200) nach einem der vorstehenden Ansprüche, umfassend die folgenden Schritte:
a) Befestigen des ersten torischen Teils (10) in einer ersten Nut (G1) eines mechanischen Teils;
b) Bewegen des zweiten torischen Teils (20) relativ zum ersten torischen Teil, sodass die Dichtung (100) eine spiralförmige Abwicklung beschreibt;
c) Befestigen jedes der mindestens zwei Arme (31, 32) in einer entsprechenden seitlichen Nut (LG) des mechanischen Teils; und
d) Befestigen des zweiten torischen Teils (20) in einer zweiten Nut (G2) des mechanischen Teils.

9. Verfahren nach Anspruch 8 für den Fall, dass die Dichtung (200) ein drittes torisches Teil (40) wie in Anspruch 7 umfasst, wobei das Verfahren die folgenden zusätzlichen Schritte umfasst:
e) Bewegen des dritten torischen Teils (40) relativ zum zweiten torischen Teil (20);
f) Befestigen jedes anderen Arms (31', 32') in einer anderen entsprechenden seitlichen Nut des mechanischen Teils; und
g) Befestigen des dritten torischen Teils (40) in einer dritten Nut des mechanischen Teils.

10. Verfahren nach einem der Ansprüche 8 oder 9, wobei das mechanische Teil ein dynamisches Element einer Klappe ist.

11. Klappe, umfassend ein Gehäuse und ein dynamisches Element, **dadurch gekennzeichnet, dass** die Klappe eine Dichtung (100, 200) umfasst, wie sie in einem der Ansprüche 1 bis 7 beschrieben ist.

12. Klappe nach dem vorstehenden Anspruch, wobei das dynamische Element ein Käfig oder eine Kugel ist.

## Revendications

1. Joint d'étanchéité (100, 200) formé d'une seule pièce de matériau résilient et comprenant :
- une première partie torique (10) ayant un premier diamètre de tore (D1) et une première section transversale avec une première dimension (d1) qui est constante dans toutes les directions ;
- une deuxième partie torique (20) ayant un deuxième diamètre de tore (D2) supérieur au premier diamètre de tore (D1) et une deuxième section transversale avec une deuxième dimension (d2) qui est constante dans toutes les directions ; et
- au moins deux bras (31, 32), chacun ayant une section transversale avec une dimension (S) qui est constante dans toutes les directions et comprenant une première extrémité et une deuxième extrémité, chaque première extrémité étant liée à la première partie torique (10) et chaque deuxième extrémité étant liée à la deuxième partie torique (20) ;
**caractérisé en ce que,** dans un état plié, ledit joint d'étanchéité (100) est sensiblement plan, et **en ce que**, pour chaque bras, ladite première extrémité est un premier coude (311, 321) orienté dans une première direction et ladite deuxième extrémité est un deuxième coude (312, 322) orienté dans une deuxième direction, ladite deuxième direction étant opposée à ladite première direction, de telle sorte que chaque bras (31, 32) s'étend sensiblement circonférentiellement entre son premier coude (311, 321) et son deuxième coude (312, 322), les premiers coudes (311, 321) des différents bras (31, 32) étant en outre tous orientés dans la même première direction, et en conséquence les deuxièmes coudes (312, 322) des différents bras étant tous orientés dans la même deuxième direction, de sorte que le joint peut être déployé par un déroulement hélicoïdal dans un état déplié tridimensionnel.

2. Joint d'étanchéité (100, 200) selon la revendication précédente, dans lequel la première dimension (d1) de la première partie torique (10) est supérieure à la deuxième dimension (d2) de la deuxième partie torique (20).

3. Joint d'étanchéité (100, 200) selon la revendication précédente, dans lequel la première partie torique (10) est configurée pour se déformer de sorte que, à l'état déplié, la première dimension (d1) diminue pour être sensiblement égale à la deuxième dimension (d2) de la deuxième partie torique (20).

4. Joint d'étanchéité (100, 200), selon l'une quelconque des revendications précédentes, dans lequel la dimension (S) des bras (31, 32) est égale à la deuxième dimension (d2) de la deuxième partie torique (20).

5. Joint d'étanchéité (100, 200), selon l'une quelconque des revendications précédentes, dans lequel les bras (31, 32) sont configurés pour se déformer de sorte que, à l'état déplié, lesdits bras sont sensiblement plus longs qu'à l'état plié.

6. Joint d'étanchéité (100, 200) selon l'une quelconque des revendications précédentes étant formé à partir d'un matériau élastomère.

7. Joint d'étanchéité (100, 200) selon l'une quelconque des revendications précédentes, comprenant une troisième partie torique (40) reliée à la deuxième partie torique (20) par au moins deux autres bras (31', 32') comprenant un premier autre coude (311', 321') relié à la deuxième partie torique (20) et orienté dans une autre première direction, et un deuxième autre coude (312', 322') lié à la troisième partie torique (40) et orienté dans une autre deuxième direction opposée à ladite autre première direction, de telle sorte que, à l'état replié, chaque autre bras (31', 32') s'étende sensiblement circonférentiellement entre son premier autre coude (311', 321') et son deuxième autre coude (312', 322').

8. Procédé de déploiement d'un joint d'étanchéité (100, 200) selon l'une quelconque des revendications précédentes comprenant les étapes de :
a) fixer la première partie torique (10) dans une première rainure (G1) d'une pièce mécanique ;
b) déplacer la deuxième partie torique (20) par rapport à la première partie torique de sorte que le joint d'étanchéité (100) décrive un déroulement hélicoïdal ;
c) fixer chacun desdits au moins deux bras (31, 32) dans une rainure latérale respective (LG) de la pièce mécanique ; et
d) fixer la deuxième partie torique (20) dans une deuxième rainure (G2) de la pièce mécanique.

9. Procédé selon la revendication 8 dans le cas où le joint d'étanchéité (200) comprend une troisième partie torique (40) comme dans la revendication 7, le procédé comprenant les étapes supplémentaires suivantes :
e) déplacer la troisième partie torique (40) par rapport à la deuxième partie torique (20) ;
f) fixer chaque autre bras (31', 32') dans une autre rainure latérale respective de la pièce mécanique ; et
g) fixer la troisième partie torique (40) dans une troisième rainure de la pièce mécanique.

10. Procédé selon l'une des revendications 8 ou 9, dans lequel la pièce mécanique est un élément dynamique d'un clapet.

11. Clapet comprenant un boîtier et un élément dynamique **caractérisée en ce que** ledit clapet comprend un joint d'étanchéité (100, 200) tel que décrit dans l'une quelconque des revendications 1 à 7.

12. Clapet selon la revendication précédente, dans lequel l'élément dynamique est une cage ou une sphère.
